# EUROPÄISCHE PATENTSCHRIFT

(11) **EP 2 028 469 B1**
(45) Veröffentlichungstag und Bekanntmachung des Hinweises auf die Patenterteilung: **12.10.2011**
(21) Anmeldenummer: 08014282.1
(22) Anmeldetag: 11.08.2008
(51) Int. Cl.: G01L 19/14

(54) **Druckmesseinrichtung**
Pressure gauge device
Dispositif de mesure de la pression

(30) Priorität: 20.08.2007 DE 102007039297
(43) Veröffentlichungstag der Anmeldung: 25.02.2009
(73) Patentinhaber: VEGA Grieshaber KG, 77709 Wolfach (DE)
(72) Erfinder: Kopp, Thomas, 77709 Wolfach (DE)
(74) Vertreter: Göhring, Robert

(56) Entgegenhaltungen:
- EP-A1- 0 735 353
- WO-A1-02/052239
- WO-A1-2005/012865
- DE-A1- 4 416 978
- DE-C1- 4 234 289

## Beschreibung

Die Erfindung betrifft eine Druckmesseinrichtung mit den oberbegrifflichen Merkmalen des Patentanspruchs 1.

Aus dem Stand der Technik sind Druckmesseinrichtungen bekannt, bei denen eine Druckmesszelle in einem die Druckmesszelle umgebenden zweiten Gehäuse aus einem chemisch beständigen Polymer angeordnet ist. Zwischen der Druckmesszelle und dem zweiten Gehäuse aus dem chemisch beständigen Polymer ist zur Abdichtung rückseitig angeordneter Prozessanschlüsse ein O-Ring vorgesehen. Dadurch, dass die Druckmesszelle, die z. B. aus Metall oder Keramik bestehen kann, einen geringeren Wärmeausdehnungskoeffizienten als das darum angeordnete zweite Gehäuse aus dem chemisch beständigen Polymer aufweist, tritt das Problem auf, dass die dichtende Wirkung des O-Ringes zwischen der Druckmesszelle und dem zweiten Gehäuse temperaturabhängig nachlassen bzw. vollständig verloren gehen kann. Da sich das Kunststoffgehäuse bei höheren Temperaturen stärker ausdehnt als die darin angeordnete Druckmesszelle, geht die klemmende Wirkung auf den dazwischen angeordneten O-Ring verloren, sodass dieser den dazwischenliegenden Spalt nicht mehr ausreichend abdichtet.

Aus dem Stand der Technik ist die DE 42 34 289 C1 bekannt, die dieses Problem dadurch löst, dass in das chemisch beständige Kunststoffgehäuse ein Metallring eingegossen wird, der eine Wärmeausdehnung des Polymergehäuses unterbindet bzw. auf die Wärmeausdehnung des eingegossenen Metallringes beschränkt. Das aus der DE 42 34 289 C1 bekannte Vorgehen hat jedoch den Nachteil, dass eine Herstellung im Spritzgussverfahren erst bei sehr hohen Stückzahlen rentabel ist, und dass eine Einbringung des Stützringes, bspw. durch spanende Bearbeitung des Kunststoffgehäuses, sehr aufwändig ist.

Im Dokument WO 02/052239 wird ebenfalls eine dreiteilige Druckmessvorrichtung mit thermisch angepassten Materialeigenschaften offenbart.

Es ist die Aufgabe der Erfindung, eine Druckmesseinrichtung zur Verfügung zu stellen, bei der auch bei großen Temperaturschwankungen eine hohe Dichtigkeit gewährleistet ist und die darüber hinaus einfach und kostengünstig herzustellen ist.

Diese Aufgabe wird durch eine Druckmesseinrichtung mit den Merkmalen des Patentanspruchs 1 gelöst.

Eine erfindungsgemäße Druckmesseinrichtung weist eine Druckmesszelle mit einem ersten Wärmeausdehnungskoeffizienten, ein die Druckmesszelle umfänglich umgebendes zweites Gehäuse mit einem zweiten Wärmeausdehnungskoeffizienten, der größer ist als der erste Wärmeausdehnungskoeffizient, und einen zwischen der Druckmesszelle und dem zweiten Gehäuse angeordneten O-Ring auf, wobei ein drittes Gehäuse vorgesehen ist, das sowohl die Druckmesszelle als auch das zweite Gehäuse umfänglich umschließt und einen dritten Wärmeausdehnungskoeffizienten aufweist, der kleiner oder gleich dem ersten Wärmeausdehnungskoeffizienten ist. Vorteilhaft ist an einer derartigen Ausgestaltung, dass durch eine außenseitige und umfänglich umgebende Anordnung des dritten Gehäuses auf einfache Art und Weise eine Wärmeausdehnung des zweiten Gehäuses in radialer Richtung unterbunden werden kann.

Insbesondere ist es vorteilhaft, wenn das zweite und das dritte Gehäuse röhrenförmig ausgebildet sind, wobei die Druckmesszelle und das dritte Gehäuse aus Metall oder Keramik und das zweite Gehäuse aus einem chemisch beständigen Kunststoff gefertigt ist. Eine vorteilhafte Anordnung ergibt sich, wenn sich das zweite Gehäuse vorderseitig erstreckt und rückseitig mit der Druckmesszelle abschließt und das dritte Gehäuse eine rückseitige Erstreckung aufweist und vorderseitig mit der Druckmesszelle abschließt. Vorteilhaft an einer derartigen Anordnung ist, dass derart ein vorderseitiger Messanschluss mit einem chemisch beständigen Kunststoff realisierbar ist und ein rückseitiger Prozessanschluss in einfacher Weise aus widerstandsfähigem Metall herstellbar ist.

Vorteilhaft ist es dabei, wenn die Druckmesszelle innerhalb des zweiten Gehäuses angeordnet ist und das zweite Gehäuse in das dritte Gehäuse eingeschraubt ist. Durch eine derartige Ausgestaltung wird eine erfindungsgemäße Druckmesseinrichtung besonders einfach montierbar und dadurch besonders günstig herstellbar. Es ist außerdem denkbar, dass das dritte Gehäuse lediglich in Form eines Ringes über das zweite Gehäuse geschraubt wird. Die erfindungsgemäßen Vorteile werden auch dadurch erzielt.

Die Erfindung wird nachfolgend anhand eines Ausführungsbeispieles unter Bezugnahme auf die beigefügte Figur ausführlich erläutert.

### Es zeigt:

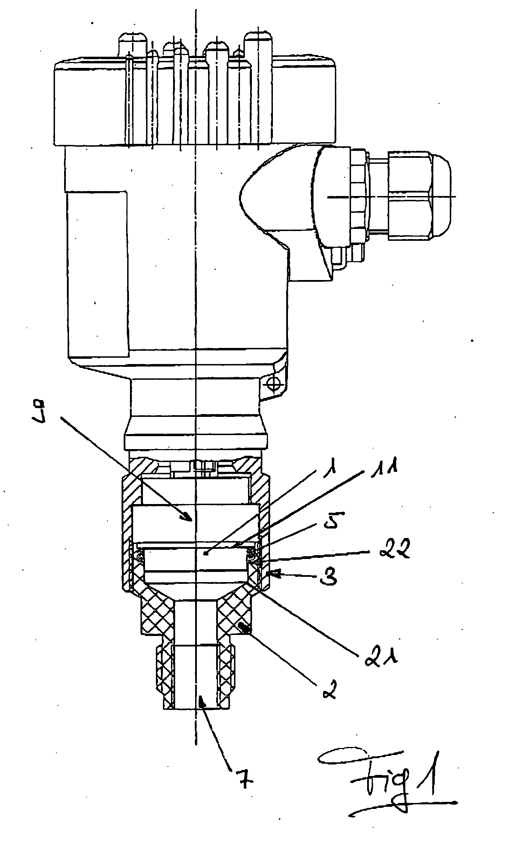

### Fig. 1 ein Ausführungsbeispiel einer erfindungsgemäßen Druckmesseinrichtung.

Fig. 1 zeigt eine erfindungsgemäße Druckmesseinrichtung mit einer Druckmesszelle 1' mit einem ersten Gehäuse 1, wobei die Druckmesszelle in einem zweiten Gehäuse 2, das sich vorderseitig erstreckt, angeordnet ist. Das zweite Gehäuse 2 ist röhrenförmig ausgebildet und weist im Bereich der Druckmesszelle 1' einen umlaufenden Rücksprung auf, in dem die kapselförmig ausgebildete Druckmesszelle 1' angeordnet ist. Auf Höhe eines rückseitigen Endes 11 der Druckmesszelle 1' weist das zweite Gehäuse 2 einen weiteren umlaufenden Rücksprung 22 auf, der zur Aufnahme eines O-Ringes 5 geeignet ist. Die Druckmesszelle 1' und das zweite Gehäuse 2 sind dabei derart ausgebildet, dass der O-Ring 5 in einem durch den weiteren Rücksprung 22 ausgebildeten Spalt derart verklemmt wird, dass ein rückseitiger Raum um die Druckmesszelle gegen den vorderseitigen Messanschluss 7 abgedichtet ist. Rückseitig ist ein drittes Gehäuse 3 angeordnet, das das zweite Gehäuse 2 sowie das erste Gehäuse 1 und die Druckmesszelle 1' umfänglich umgreift und in einen rückseitigen Prozessanschluss 9 übergeht. Das dritte Gehäuse 3 ist rohrförmig ausgebildet und weist in einem vorderseitigen Bereich ein Innengewinde auf, das derart ausgestaltet ist, dass das zweite Gehäuse 2 mit einem entsprechend angeordneten Außengewinde in das dritte Gehäuse 3 einschraubbar ist. Durch eine geeignete Wahl der Materialien zur Herstellung der verschiedenen Gehäuseteile und der Druckmesszelle 1' können die erfindungsgemäßen Vorteile in einfacher Weise erreicht werden. Typischerweise ist die Druckmesszelle aus einem metallischen Werkstoff gefertigt. Aus prozesstechnischen Gründen ist es häufig notwendig, das zweite Gehäuse 2, das den vorderseitigen Messanschluss 7 ausformt, aus einem chemisch beständigen Kunststoff herzustellen. Der chemisch beständige Kunststoff, bspw. ein Polymer, weist aber einen Wärmeausdehnungskoeffizienten α2 auf, der größer ist als ein Wärmeausdehnungskoeffizient α1 der Druckmesszelle 1'. Durch diesen Umstand bedingt, dehnt sich das zweite Gehäuse 2 bei hohen Temperaturen in radialer Richtung mehr aus als die Druckmesszelle 1', sodass die klemmende Wirkung auf den O-Ring 5 nachlässt. Diesem Effekt wird durch das dritte Gehäuse 3, das von der Rückseite her über das zweite Gehäuse 2 geschraubt wird, entgegengewirkt. Das dritte Gehäuse 3 ist aus einem Werkstoff gefertigt, der einen dritten Wärmeausdehnungskoeffizienten α3 aufweist.Der dritte Wärmeausdehnungskoeffizient α3 ist dem ersten Wärmeausdehnungskoeffizienten α1 ähnlich, idealerweise sogar kleiner oder gleich dem ersten Wärmeausdehnungskoeffizienten α1. Durch eine derartige Materialwahl wird gewährleistet, dass durch das dritte Gehäuse 3 einer Wärmeausdehnung des zweiten Gehäuses 2 in radialer Richtung entgegengewirkt wird, sodass die klemmende Wirkung auf den O-Ring 5 nicht verloren geht.

Es ist dabei anzumerken, dass die Materialwahl für die Druckmesszelle 1' und das dritte Gehäuse 3 nicht auf identische Materialien beschränkt ist, sondern insbesondere Materialien mit ähnlichen Wärmeausdehnungskoeffizienten vorteilhaft sind.

### Bezugszeichenliste

- 1: erstes Gehäuse
- 1': Druckmesszelle
- 2: zweites Gehäuse
- 5: O-Ring
- 7: Messanschluss
- 9: Prozessanschluss

- 21: erster Rücksprung
- 22: weiterer Rücksprung

- α1: erster Wärmeausdehnungskoeffizient
- α2: zweiter Wärmeausdehnungskoeffizient
- α3: dritter Wärmeausdehnungskoeffizient

## Patentansprüche

1. Druckmesseinrichtung mit
- einer Druckmesszelle (1'), die einen ersten Wärmeausdehnungskoeffizienten (α1) aufweist,
- einem die Druckmesszelle (1') umfänglich umgebenden zweiten Gehäuse (2), das einen zweiten Wärmeausdehnungskoeffizienten (α2) aufweist, der größer ist als der erste Wärmeausdehnungskoeffizient (α1) und
- einem zwischen der Druckmesszelle (1') und dem zweiten Gehäuse (2) angeordneten O-Ring (5), wobei
ein drittes Gehäuse (3) vorgesehen ist, das sowohl die Druckmesszelle (1') als auch das zweite Gehäuse (2) umfänglich umschließt **dadurch gekennzeichnet, dass** das dritte Gehäuse einen dritten Wärmeausdehnungskoeffizienten (α3) aufweist, der kleiner oder gleich dem ersten Wärmeausdehnungskoeffizienten (α1) ist.

2. Druckmesseinrichtung nach Anspruch 1,
**dadurch gekennzeichnet, dass** das zweite Gehäuse (2) und das dritte Gehäuse (3) röhrenförmig ausgebildet sind.

3. Druckmesseinrichtung nach einem der vorhergehenden Ansprüche,
**dadurch gekennzeichnet, dass** das zweite Gehäuse (2) aus einem chemisch beständigen Kunststoff gefertigt ist.

4. Druckmesseinrichtung nach einem der vorhergehenden Ansprüche,
**dadurch gekennzeichnet, dass** sich das zweite Gehäuse (2) vorderseitig erstreckt und rückseitig mit der Druckmesszelle (1') abschließt.

5. Druckmesseinrichtung nach einem der vorhergehenden Ansprüche,
**dadurch gekennzeichnet, dass** sich das dritte Gehäuse (3) rückseitig erstreckt und vorderseitig mit der Druckmesszelle (1') abschließt.

6. Druckmesseinrichtung nach einem der Ansprüche 1 bis 3,
**dadurch gekennzeichnet, dass** das dritte Gehäuse ringförmig (3) ausgebildet ist.

7. Druckmesseinrichtung nach einem der vorhergehenden Ansprüche,
**dadurch gekennzeichnet, dass** die Druckmesszelle (1') innerhalb des zweiten Gehäuses (2) angeordnet ist und dass das zweite Gehäuse (2) in das dritte Gehäuse (3) eingeschraubt ist.

8. Druckmesseinrichtung nach einem der vorhergehenden Ansprüche,
**dadurch gekennzeichnet, dass** das zweite Gehäuse (2) einen umlaufenden Absatz oder eine umlaufende Nut zur Aufnahme des O-Rings (5) aufweist.

## Claims

1. A pressure measuring device with
- a pressure measuring cell (1') which has a first thermal expansion coefficient (α1),
- a second casing (2) which surrounds the pressure measuring cell (1') on the periphery and which has a second thermal expansion coefficient (α2) which is greater than the first thermal expansion coefficient (α1), and
- an O-ring (5) arranged between the pressure measuring cell (1') and the second casing (2), wherein
a third casing (3) is provided which surrounds both the pressure measuring cell (1') and the second casing (2) on the periphery, **characterized in that** the third casing has a third thermal expansion coefficient (α3) which is smaller than or equal to the first thermal expansion coefficient (α1).

2. A pressure measuring device according to claim 1, **characterized in that** the second casing (2) and the third casing (3) are designed in the form of tubes.

3. A pressure measuring device according to one of the preceding claims, **characterized in that** the second casing (2) is produced from a chemically resistant material.

4. A pressure measuring device according to any one of the preceding claims, **characterized in that** the second casing (2) extends on the front side and terminates on the rear side with the pressure measuring cell (1').

5. A pressure measuring device according to any one of the preceding claims, **characterized in that** the third casing (3) extends on the rear side and terminates on the front side with the pressure measuring cell (1').

6. A pressure measuring device according to any one of claims 1 to 3, **characterized in that** the third casing (3) is made annular.

7. A pressure measuring device according to any one of the preceding claims, **characterized in that** the pressure measuring cell (1') is arranged inside the second casing (2), and the second casing (2) is screwed into the third casing (3).

8. A pressure measuring device according to any one of the preceding claims, **characterized in that** the second casing (2) has a continuous offset or a continuous groove for receiving the O-ring (5).

## Revendications

1. Installation de mesure de pression comprenant :
- une cellule de mesure de pression (1') ayant un premier coefficient de dilatation thermique (α1),
- un second boîtier (2) entourant de façon périphérique la cellule de mesure de pression (1'), ce second boîtier ayant un second coefficient de dilatation thermique (α2) supérieur au premier coefficient de dilatation thermique (α1), et
- un joint torique (5) installé entre la cellule de mesure de pression (1') et le second boîtier (2),
- un troisième boîtier (3) entourant de manière périphérique à la fois la cellule de mesure de pression (1') et le second boîtier (2),
installation de mesure **caractérisée en ce que**
- le troisième boîtier a un troisième coefficient de dilatation thermique (α3) inférieur ou égal au premier coefficient de dilatation thermique (α1).

2. Installation de mesure de pression selon la revendication 1,
**caractérisée en ce que**
le second boîtier (2) et le troisième boîtier (3), ont une forme tubulaire.

3. Installation de mesure de pression selon l'une des revendications précédentes,
**caractérisée en ce que**
le second boîtier (2) est fabriqué en une matière plastique résistant aux agents chimiques.

4. Installation de mesure de pression selon l'une des revendications précédentes,
**caractérisée en ce que**
le second boîtier (2) s'étend du côté avant et du côté arrière en enfermant la cellule de mesure de pression (1').

5. Installation de mesure de pression selon l'une des revendications précédentes,
**caractérisée en ce que**
le troisième boîtier (3) s'étend du côté arrière et du côté avant en enfermant la cellule de mesure de pression (1').

6. Installation de mesure de pression selon l'une des revendications 1 à 3,
**caractérisée en ce que**
le troisième boîtier est de forme annulaire (3).

7. Installation de mesure de pression selon l'une des revendications précédentes,
**caractérisée en ce que**
la cellule de mesure de pression (1') est placée dans le second boîtier (2), et
le second boîtier (2) est vissé dans le troisième boîtier (3).

8. Installation de mesure de pression selon l'une des revendications précédentes,
**caractérisée en ce que**
le second boîtier (2) comporte un épaulement périphérique ou une rainure périphérique pour recevoir le joint torique (5).
